# EUROPÄISCHE PATENTSCHRIFT

(11) **EP 2 429 837 B1**
(45) Veröffentlichungstag und Bekanntmachung des Hinweises auf die Patenterteilung: **23.04.2014**
(21) Anmeldenummer: 10713418.1
(22) Anmeldetag: 26.03.2010
(51) Int. Cl.: B60G 3/14, B60G 3/22, B60G 7/02, B60G 7/04

(54) **FAHRZEUG-RADAUFHÄNGUNG DER SCHRÄGLENKER-BAUART**
TRAILING ARM VEHICLE SUSPENSION WITH BRAKE- AND LATERAL FORCE COMPLIANCE UNDERSTEER
BRAS TIRÉ POUR UNE SUSPENSION DE VÉHICULE

(30) Priorität: 16.05.2009 DE 102009021672
(43) Veröffentlichungstag der Anmeldung: 21.03.2012
(73) Patentinhaber: Bayerische Motoren Werke Aktiengesellschaft, 80809 München (DE)
(72) Erfinder: JAKOB, Benjamin, 80807 München (DE)
(86) Internationale Anmeldenummer: PCT/EP2010/001921
(87) Internationale Veröffentlichungsnummer: WO 2010/133274

(56) Entgegenhaltungen:
- DE-A1- 2 256 358
- DE-A1- 2 822 058
- DE-A1- 3 242 930
- DE-A1- 19 816 804
- JP-A- 2000 025 434

## Beschreibung

Die Erfindung betrifft eine Fahrzeug-Radaufhängung der Schräglenker-Bauart mit von einem Radträger ausgehenden Lenkerarmen, von denen ein erster annähernd in Fahrzeug-Längsrichtung ausgerichtet ist und ein zweiter annähernd in Richtung einer Winkelhalbierenden zwischen der Fahrzeug-Längsrichtung und Fahrzeug-Querrichtung verläuft und deren letztlich am Fahrzeugaufbau über Lenkerarm-Lager abgestützte Enden eine im wesentliche horizontale Momentanachse für den Radträger bezüglich Ein-und Ausfederbewegungen des Fahrzeugaufbaus bestimmen, wobei der Radträger durch geeignete Gestaltung von zumindest einem der Lenkerarme sowie geeignet elastischer Ausbildung zumindest eines der Lenkerarm-Lager unter Einwirkung von Bremskräften oder im Falle einer Kurvenfahrt von Seitenkräften auf das kurvenäußere am Radträger befestigte Rad geringfügig um eine sog. Spur-Achse insbesondere in Richtung Vorspur verschwenkbar ist. Zum Stand der Technik wird insbesondere auf die DE 32 42 930 C1 und ferner auf die EP 0 052 153 verwiesen, wenngleich die letztgenannte Schrift keine Schräglenkerachse zeigt, sondern eine besondere elastische Ausbildung eines elastischen Lenkerarm-Lagers mit unterschiedlichen Federraten in zueinander in etwa senkrechten Richtungen.

Bekannt ist dem Fachmann, dass die einfachen Schräglenker-Radaufhängungen, die vorzugsweise an angetriebenen Hinterachsen von Kraftfahrzeugen zum Einsatz kommen, eine unerwünschte Übersteuertendenz aufweisen, indem das kurvenäußere Rad unter Seitenkrafteinwirkung in Nachspur geht. Vorgeschlagen wurden bereits unterschiedliche Abhilfemaßnahmen hiergegen (vgl. beispielsweise DE 39 00 336 C2, DE 102 49 44 5A1, DE 32 42 930 C1), mit Hilfe derer das Rad beim Bremsen sowie bei Kurvenfahrt das kurvenäußere Rad unter Seitenkrafteinwirkung in Vorspur verschwenkt wird, jedoch haben sich jedenfalls solche der bekannten Maßnahmen, die unter fahrdynamischen Gesichtspunkten keine nennenswerten Nachteile aufweisen, nicht durchsetzen können. So dürfte bei einer kinematisch vorteilhaft erscheinenden Radaufhängung nach der DE 32 42 930 C1, die als nächstkommender Stand der Technik betrachtet wird, unter vernünftiger Dimensionierung keine ausreichende Standfestigkeit erzielbar sein.

Hiermit soll folglich eine kinematisch günstige Radaufhängung nach dem Oberbegriff des Anspruchs 1 aufgezeigt werden, die auch den weiteren durch einen Einsatz in der Großserie, insbesondere für Personenkraftwagen, bedingten Anforderungen genügen kann (= Aufgabe der vorliegenden Erfindung).

Die Lösung dieser Aufgabe ist dadurch gekennzeichnet, dass mit dem Radträger ein Stützarm fest verbunden ist, der über eine gewisse Strecke neben dem zweiten Lenkerarm im wesentlichen parallel zu diesem verläuft und an diesem zweiten Lenkerarm im Bereich zwischen dessen radträgerseitigem Ende und fahrzeugaufbau-seitigem Ende über eine Abstützung abgestützt ist, die in im wesentlichen horizontaler Richtung wesentlicher weicher ist als in im wesentlichen vertikaler Richtung, wobei eine geeignete Gestaltung des zweiten Lenkerarms und/oder des Stützarmes die geringfügige Verschwenkbewegung des Radträgers um die Spur-Achse ermöglicht. Dabei gibt es verschiedene Möglichkeiten, den Stützarm und/oder den zweiten Lenkerarm solchermaßen zu gestalten oder auszubilden; eine Möglichkeit der geeigneten Gestaltung des zweiten Lenkerarms und/oder des Stützarmes besteht darin, dass zumindest einer dieser beiden Lenkerarme nach Art eines sog. Schwertlenkers in Vertikalrichtung sowie im wesentlichen in Fahrzeug-Querrichtung steif und in der Horizontalebene in Fahrzeug-Längsrichtung elastisch verformbar ausgebildet ist. Eine alternative Möglichkeit, die an späterer Stelle in Form eines Ausführungsbeispiels näher erläutert wird, besteht darin, dass der zweite Lenkerarm ein eigenständiges und somit vom Radträger trennbares Bauteil ist, das/der mit einem Ende zur Darstellung der genannten Spur-Achse gelenkig mit dem Radträger verbunden ist.

Sowohl der hier vorgeschlagene Stützarm als auch der zweite Lenkerarm können in einfacher Weise so gestaltet werden, dass sie dauerfest die zu übertragenden Kräfte, bei denen es sich vorrangig um die auf das Rad einwirkenden Seitenkräfte handelt, aufnehmen können. Gleiches gilt für die Lager oder Gelenke, über die der zweite Lenkerarm letztlich mit dem Fahrzeugaufbau verbunden ist. Ebenso kann der Radträger mit dem ersten Lenkerarm einfach entsprechend allen Anforderungen gestaltet werden, ohne in der Auslegung des Radträgers bspw. hinsichtlich Festigkeit besondere Rücksicht auf die gewünschte Verschwenkbewegung in Vorspur nehmen zu müssen. Dies ist vereinfacht ausgedrückt dadurch ermöglicht, dass anstelle eines bisher üblichen einfachen Schräglenkers quasi ein aus zwei Bauteilen, die im wesentlichen in der Horizontebene um die genannte Spur-Achse geringfügig gegeneinander verschwenkbar sind, zusammengesetzter Schräglenker zum Einsatz kommt, wobei der zweite Lenkerarm und der besagte Stützarm, welcher ebenso wie der erste Lenkerarm einstückig mit dem Radträger verbunden ist, vorzugsweise über eine gewisse Strecke im wesentlichen parallel nebeneinander verlaufen. Letzteres gewährleistet vorteilhafterweise eine bestmögliche Radführung insbesondere unter Einwirkung von Seitenkräften. Der zweite Lenkerarm kann dabei ebenfalls einstückig mit dem Radträger verbunden sein, jedoch muss dieser zweite Lenkerarm dann in sich eine ausreichende Flexibilität zur Darstellung der gewünschten Verschwenkbarkeit des Radträgers aufweisen. Alternativ kann der zweite Lenkerarm ein eigenständiges Bauteil sein, das in der Nähe des Rades geringfügig schwenkbar am Radträger befestigt ist.

Im übrigen ist analog dem eingangs genannten Stand der Technik das Lenkerarm-Lager des ersten Lenkerarms ausgebildet, nämlich relativ steif in einer im wesentlichen in Fahrzeug-Längsrichtung verlaufenden Richtung sowie relativ weich in einer hierzu senkrechten Richtung, um eine Spuränderung des Rades unter Seitenkrafteinwirkung überhaupt zu ermöglichen.

Die besagte Abstützung zwischen dem Stützarm und dem zweiten Lenkerarm ist vorzugsweise solchermaßen gestaltet, dass das kurvenäußere Rad unter Einwirkung von Seitenkräften und bei Geradeausfahrt jedes Rad unter Einwirkung von Bremskräften in Vorspur verschwenkt wird. Dies wird zum einen durch die in unterschiedlichen Richtungen unterschiedlich vorgegebene Elastizität dieser Abstützung erreicht, welche in im wesentlichen horizontaler Richtung relativ weich ist. Hingegen ist diese Abstützung in im wesentlichen vertikaler Richtung relativ hart bzw. unelastisch, um eine exakte Radführung darstellen zu können. Jedenfalls bei einer Ausbildung des zweiten Lenkerarms als eigenständiges und somit vom Radträger trennbares Bauteil wird dieses gewünschte elastokinematische Verhalten dadurch erreicht, das die Abstützung zwischen dem Stützarm und dem zweiten Lenkerarm relativ zum Anlenkpunkt des zweiten Lenkerarms am Radträger solchermaßen angeordnet ist, dass der Stützarm und somit auch der Radträger sowohl unter Einwirkung von Seitenkräften als auch unter Einwirkung von Bremskräften auf das am Radträger befestigte Rad in im wesentlichen horizontale Richtung oder geringfügig hierzu geneigt derart gegenüber dem zweiten Lenkerarm verschwenkt wird, dass das (bei Kurvenfahrt kurvenäußere) Rad in Vorspur geht. Dabei kann diese Abstützung zwischen dem Stützarm und dem zweiten Lenkerarm in Form einer Pendelstütze oder eines geeignet in unterschiedlichen Richtungen unterschiedlich elastisch gestalteten Gummilagers ausgebildet sein.

Im übrigen kann es im Hinblick auf eine unter allen Randbedingungen möglichst exakte Radführung empfehlenswert sein, wenn die mögliche Verschwenkbewegung des Radträgers bzw. des Stützarms gegenüber dem zweiten Lenkerarm durch einen Anschlag begrenzt ist. Schließlich ist eine kräftemäßig als auch im Hinblick auf den erforderlichen Bauraum günstige Anordnung der Tragfeder für den Fahrzeugaufbau im Anspruch 7 angegeben, wobei selbstverständlich auch andere Anordnungen der Tragfeder möglich sind. Letzteres gilt übrigens auch für die Anordnung eines der Tragfeder funktional parallel geschalteten Dämpfers, für welche das im folgenden beschriebene Ausführungsbeispiel, anhand dessen die Erfindung weiter erläutert wird, eine Möglichkeit zeigt.

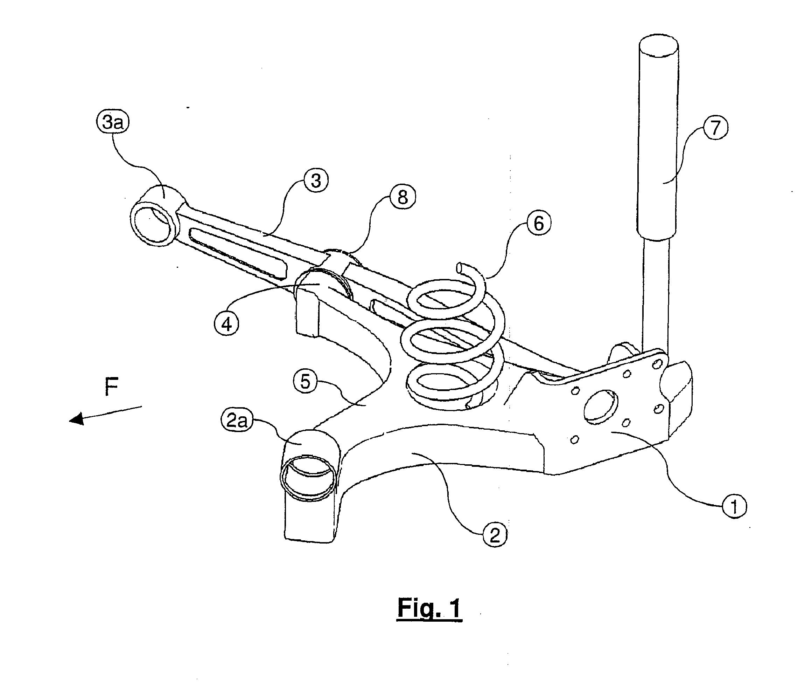

In den beigefügten Figurendarstellungen ist als Ausführungsbeispiel der vorliegenden Erfindung eine linke hintere Radaufhängung eines Personenkraftwagens dargestellt. Dabei zeigt die beigefügte
- Fig.1: eine erste isometrische Ansicht von außen her, wobei die Fahrtrichtung durch den Pfeil F dargestellt ist,

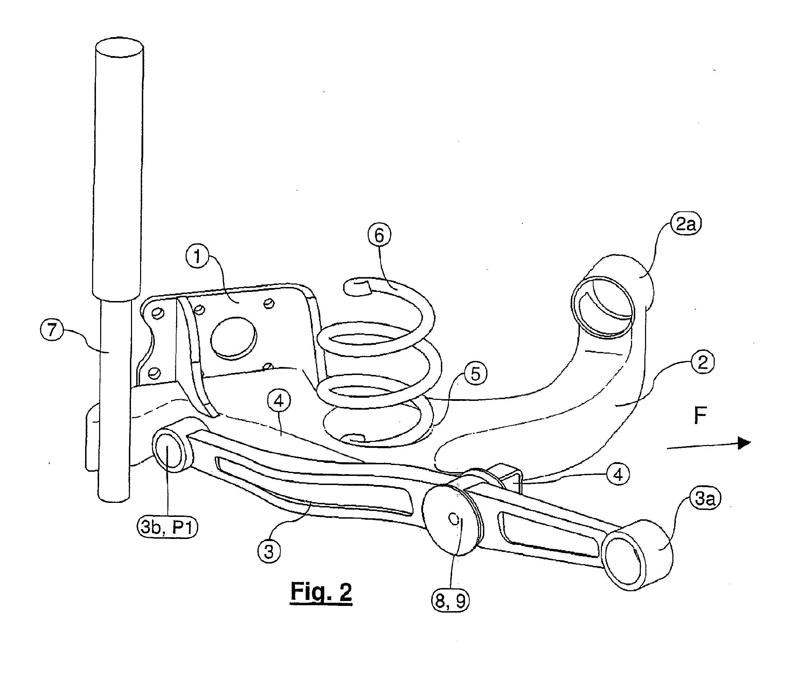

- Fig.2: eine zweite isometrische Ansicht von innen her, d.h. von der Fahrzeugmitte aus; die Fahrtrichtung entspricht wieder dem Pfeil F,

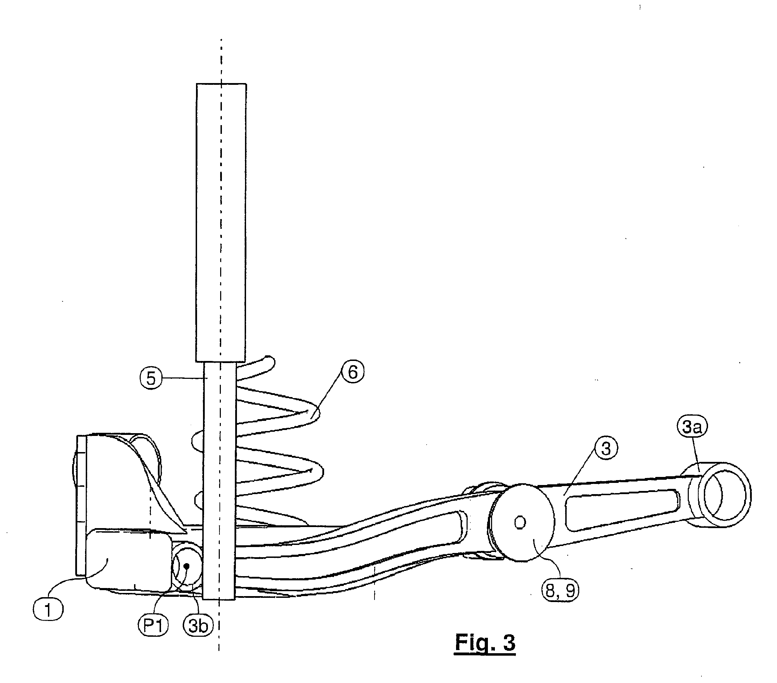

- Fig.3: die Rückansicht von hinten auf die Radaufhängung,

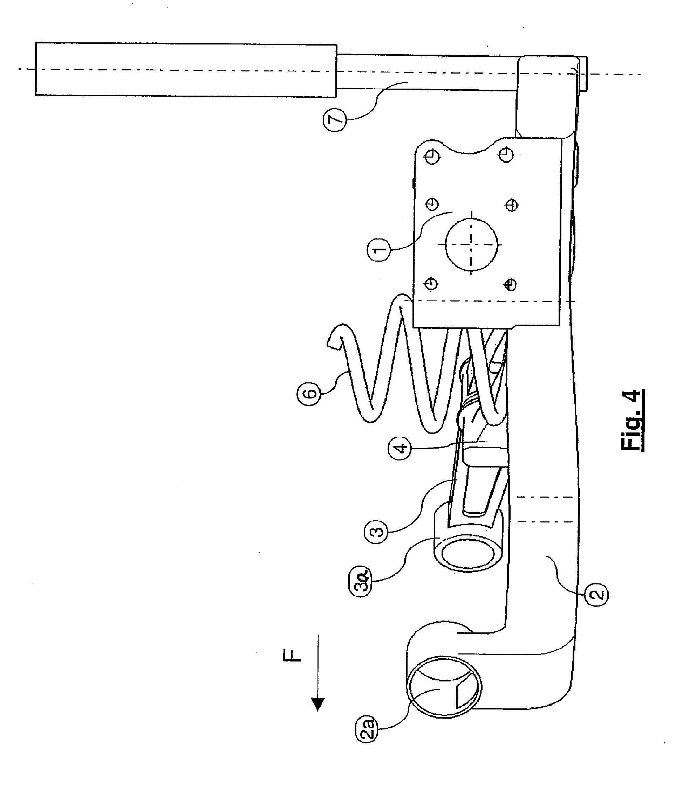

- Fig.4: die Seitenansicht von außen her,
- Fig.5: die Draufsicht von oben auf die Radaufhängung, sowie
- Fig.6: den Schnitt A-A aus Fig.5. Die
- Fig.7a und Fig.7b: zeigen nochmals den Schnitt A-A und den Schnitt B-B aus Fig.5 zur Erläuterung der kinematischen Zusammenhänge, während in den
- Fig.8a und Fig.8b: vergleichbar den Fig. 7a, 7b eine alternative Ausführungsform gezeigt ist, bei welcher die Abstützung des Stützarms gegenüber dem zweiten Lenker um einen gewissen Betrag im Uhrzeigersinn verdreht ist.

In sämtlichen Figuren sind gleiche Bauelemente mit den gleichen Bezugsziffern gekennzeichnet und erfindungswesentlich können alle näher beschriebenen Merkmale sein.

So trägt ein Radträger, an dem ein nicht dargestelltes Rad um seine Drehachse drehbar angebracht ist, die Bezugsziffer 1. Einstückig an diesem Radträger 1 vorgesehen ist ein erster Lenkerarm 2, der ausgehend vom Radträger 1 im wesentlichen in Fahrzeuglängsrichtung (bzw. Fahrtrichtung F) nach vorne ausgerichtet ist. In einem am Radträger 1 relativ nahe beim Rad liegenden Punkt P1 ist ein zweiter Lenkerarm 3 gelenkig mit dem Radträger 1 verbunden. Dieser zweite Lenkerarm 3 erstreckt sich ausgehend vom Radträger 1 im wesentlichen in Richtung einer Winkelhalbierenden zwischen der Fahrzeug-Längsrichtung (F) und der (hierzu senkrechten) Fahrzeug-Querrichtung. Im wesentlichen parallel zu diesem zweiten Lenkerarm 3 erstreckt sich über einen Teil von diesem ein sog. Stützarm 4, welcher einstückig mit dem Radträger 1 verbunden ist und somit ebenfalls vom Radträger 1 ausgeht. Zwischen diesem Stützarm 4 und dem ersten Lenkerarm 2 ist auf einem sog. Stegabschnitt 5, der ebenso wie der erste Lenkerarm 2 und der Stützarm 4 einstückig mit dem Radträger 1 verbunden ist und somit einen Bestandteil dieses einstückigen "Verbundes" aus Radträger 1, erstem Lenkerarm 2, Stützarm 4 und Stegabschnitt 5 darstellt, eine Tragfeder 6 abgestützt, über welche der nicht dargestellte Fahrzeugaufbau anteilig letztlich auf dem vom Radträger 1 getragenen Rad abgestützt ist. Ein üblicher Dämpfer zur Bedämpfung der über die Tragfeder 6 möglichen Einfeder-Bewegung und Ausfeder-Bewegung des Fahrzeugaufbaus gegenüber dem Radträger 1 ist mit der Bezugsziffer 7 gekennzeichnet und am Radträger 1 an einer geeigneten Stelle angebracht und mit seinem anderen Ende am Fahrzeugaufbau befestigt.

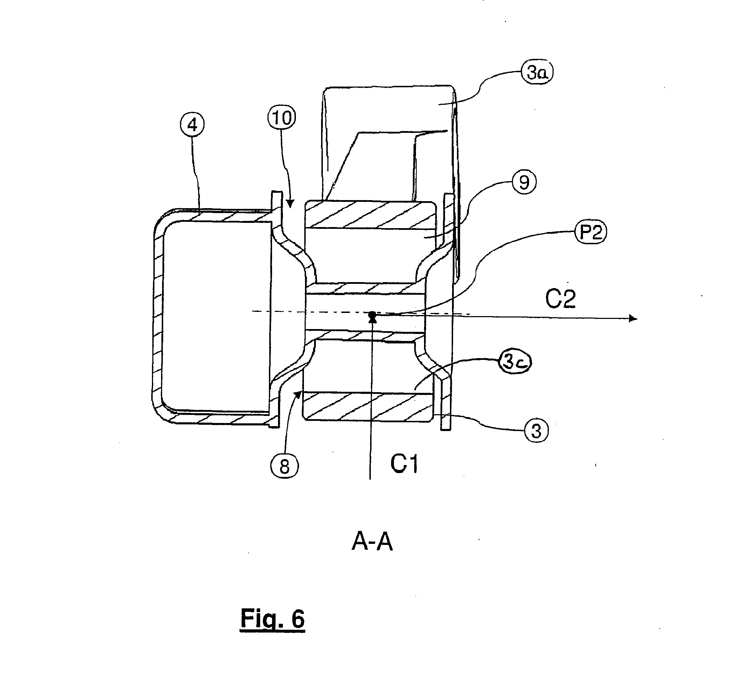

Am freien Ende des ersten Lenkerarms 2 ist eine Aufnahme für ein figürlich nicht detailliert dargestelltes Lenkerarm-Lager 2a vorzugsweise in Form eines Gummilagers vorgesehen, über welches dieser erste Lenkerarm 2 direkt oder indirekt am Fahrzeugaufbau abgestützt ist. An jedem Ende des zweiten Lenkerarms 3 ist eine Aufnahme für ein nicht dargestelltes Lenkerarm-Lager 3a bzw. 3b vorzugsweise jeweils in Form eines Gummilagers vorgesehen, so dass dieser zweite Lenkerarm 3 mit seinem ersten Ende über das Lenkerlager 3b im Punkt P1 am Radträger 1 angelenkt und mit seinem zweiten Ende über das Lenkerarm-Lager 3a direkt oder indirekt am Fahrzeugaufbau abgestützt ist. An diesem zweiten Lenkerarm 3 ist weiterhin im Bereich zwischen dessen beiden Enden eine Abstützung 8 für den genannten vom Radträger 1 ausgehenden Stützarm 4, genauer für dessen freies Ende, vorgesehen. Diese Abstützung 8 ist hier durch ein Gummilager 9 (vgl. Fig.6) gebildet, das in einer hierfür im Lenkerarm 3 vorgesehenen Aufnahme 3c eingepresst ist. Dieses Gummilager 9 und somit diese Abstützung 8 ist bzw. sind in im wesentlichen horizontaler Richtung wesentlicher weicher oder elastischer ausgebildet als in im wesentlichen vertikaler Richtung. Die im wesentlichen in horizontaler Richtung wirkende Federkonstante C2 dieser Abstützung 8 oder des Gummilagers 9 ist somit erheblich geringer als die im wesentlichen in vertikaler Richtung wirkende Federkonstante C1 dieser Abstützung 8 oder des Gummilagers 9 (vgl. Fig.6).

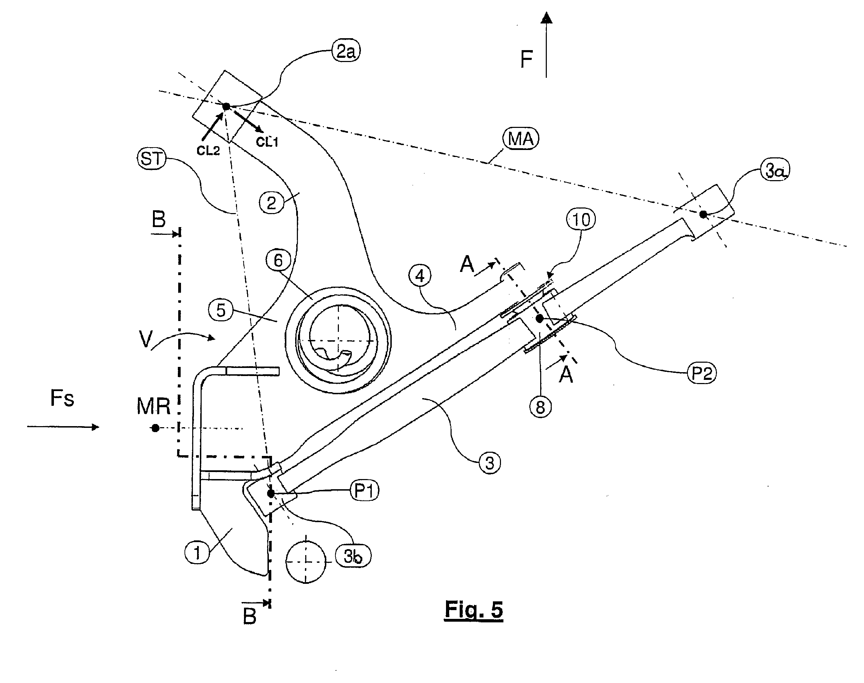

Wie bei Radaufhängungen der Schräglenker-Bauart ergeben die fahrzeugaufbauseitigen Lenkerarm-Lager 2a und 3a des ersten Lenkerarms 2 und des zweiten Lenkerarms 3 eine (geringfügig) gegenüber der Fahrzeug-Querrichtung geneigt verlaufende Momentan-Achse MA (vgl. Fig.5), um die der Radträger 1 beim Einfedern und Ausfedern des Fahrzeugaufbaus gegenüber dem Fahrzeugaufbau unter Spannung oder Entspannung der Tragfeder 6 verschwenkt wird. Wie bei den Radaufhängungen nach dem eingangs genannten Stand der Technik ist am ersten Lenkerarm 2 die Aufnahme für das Lenkerarm-Lager 2a solchermaßen ausgestaltet und es weist das in dieser Aufnahme vorgesehene Gummilager bzw. Lenkerarm-Lager 2a solchermaßen unterschiedliche Elastizitäten in zueinander senkrechten Richtungen der Horizontalebene auf, dass das am Radträger 1 befestigte Rad beim Bremsen in Vorspur geht. Analog diesem genannten Stand der Technik ist auch vorliegend die im wesentlichen in Richtung der Momentan-Achse MA wirkende Federkonstante CL1 (vgl. Fig.5) des Lenkerarm-Lagers 2a erheblich geringer ist als dessen im wesentlichen senkrecht zu dieser Momentan-Achse MA und somit vorrangig in Fahrzeug-Längsrichtung wirkende Federkonstante CL2, wobei es keinen zwingenden Zusammenhang zwischen den Steifigkeiten des Lenkerarm-Lagers 2a und der Momentanachse gibt; ein solcher wurde hier nur zur näherungsweisen Angabe der Ausrichtung dieser Steifigkeiten hergestellt.

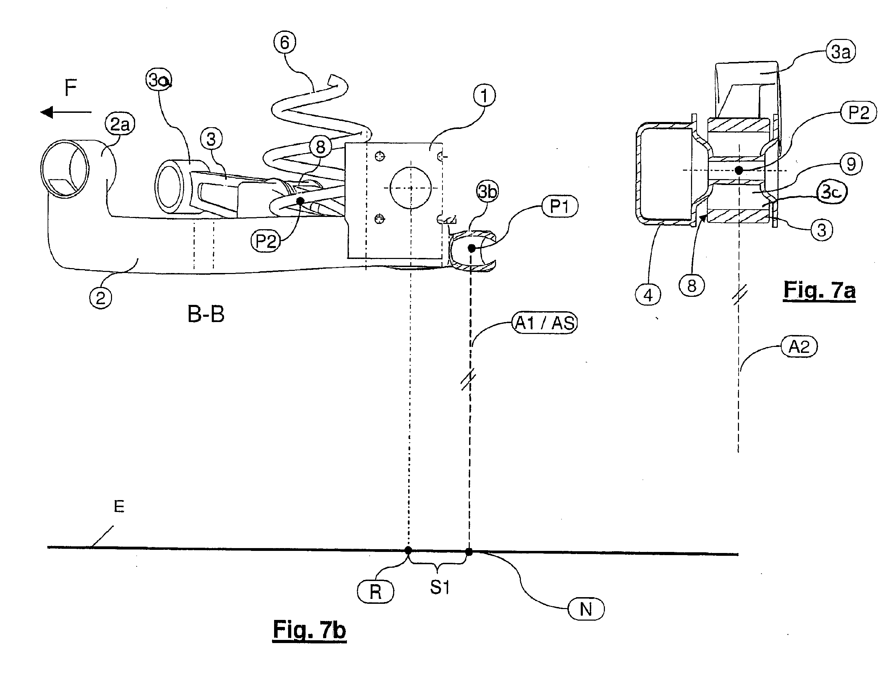

Zusätzlich hierzu ist die Abstützung 8 bzw. hier das Gummilager 9 zwischen dem Stützarm 4 und dem zweiten Lenkerarm 3 solchermaßen gestaltet und relativ zum Anlenkpunkt P1 des zweiten Lenkerarms 3 am Radträger 1 solchermaßen angeordnet, dass der Stützarm 4 sowohl unter Einwirkung von Seitenkräften (F_{S} in Fig.5) bei Kurvenfahrt als auch unter Einwirkung von Bremskräften auf das am Radträger 1 befestigte Rad, dessen Mittelpunktmit u.a. in Fig.5 mit MR gekennzeichnet ist, in im wesentlichen horizontale Richtung oder geringfügig hierzu geneigt derart gemäß Pfeil V (vgl. Fig.5) um den Punkt P1 bzw. um eine durch diesen Punkt P1 im wesentlichen oder annähernd vertikal verlaufende sog. Spur-Achse AS (vgl. Fig. 7b) gegenüber dem zweiten Lenkerarm 3 verlagert wird, dass der Radträger 1 und somit das Rad in Vorspur verschwenkt wird, wenn es sich um das kurvenäußere Rad handelt. Dabei ist das in der Aufnahme 3b des zweiten Lenkerarms 3 vorgesehene Gummilager relativ steif ausgebildet; alternativ kann an dieser Stelle ein Kugelgelenk zur gelenkigen Anbindung des zweiten Lenkerarms 3 am Radträger 1 im Punkt P1 vorgesehen sein.

Der mögliche Verlagerungs-Weg des Stützarms 4 und somit der mögliche Verschwenk-Weg des Radträgers 1 gegenüber dem zweiten Lenkeram 3 (zur Erzielung des geschilderten Verschwenkens des Rades in Vorspur) kann durch einen Anschlag begrenzt sein bzw. ist vorliegend durch einen Anschlag 10 begrenzt (vgl. Fig.6). Hierfür kommt nach einer vorgegebenen Wegstrecke der Stützarm 4 am zweiten Lenkerarm 3 seitlich zur Anlage.

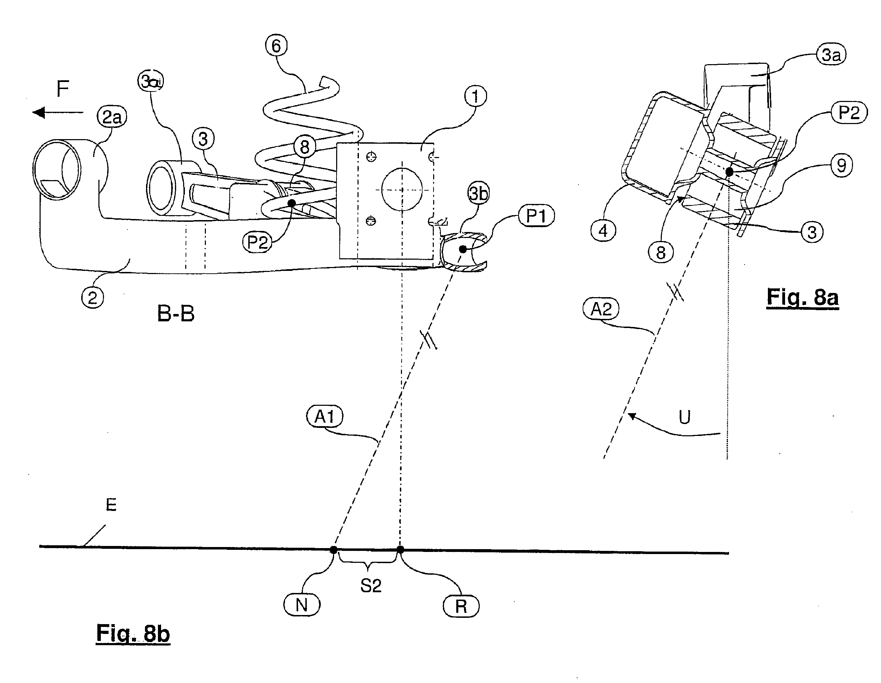

Anhand der Figuren 7a, 7b werden die entsprechenden Zusammenhänge nochmals kurz erläutert, insbesondere jedoch wird im folgenden anhand eines Vergleichs der Figuren 7a, 7b mit den Figuren 8a, 8b ein weiterer "Parameter" erläutert, mit Hilfe dessen die vorliegende Radaufhängung hinsichtlich ihrer elastokinematischen Eigenschaften den jeweiligen Anforderungen entsprechend gestaltet werden kann, wobei dieser weitere Parameter bei den als Stand der Technik angegebenen Radaufhängungen nicht zur Verfügung steht. Dieser weitere "Parameter" bildet somit einen zusätzlichen Vorteil einer erfindungsgemäßen Radaufhängung gegenüber dem bekannten Stand der Technik und wird durch die Einbaulage bzw. Neigung des Gummilagers 9 bzw. durch die Ausgestaltung der Abstützung 8 gebildet, die kinematisch betrachtet in einem Punkt P2 wirksam ist.

Eine zur Fahrbahn senkrechte Projektion des Rad-Mittelpunktes MR auf die Fahrbahn E ergibt den Radaufstandspunkt R. Nach den Figuren 6, 7a ist das Gummilager 9 in der Abstützung 8, über das/die der Stützarm 4 am zweiten Lenkerarm 3 abgestützt ist, so angeordnet, dass die weichere Abstützung exakt in Horizontalrichtung erfolgt und die demgegenüber wesentlich härtere Abstützung exakt in Vertikalrichtung längs der Achse A2 wirksam ist. Dann ergibt der Schnittpunkt der im vorliegenden Ausführungsbeispiel zur Achse A2 parallelen und durch den Punkt P1 verlaufenden Achse A1 mit der Fahrbahn den sog. seitenkraftneutralen Punkt N. Würde die auf das Rad wirkende Seitenkraft in diesem seitenkraftneutralen Punkt N angreifen, so würde das Rad unter dieser Seitenkraft-Einwirkung keine Spuränderung erfahren. Für die Untersuchungen des elastokinematischen Verhaltens jedoch greifen die Seitenkräfte im Radaufstandspunkt R an. Beim Ausführungsbeispiel nach Fig.7b liegt nun der seitenkraftneutrale Punkt N in Fahrtrichtung F betrachtet um eine elastokinematische Vorlaufstrecke S1 hinter dem Radaufstandspunkt R. Demzufolge führen Seitenkräfte, die im Radaufstandspunkt R angreifen, zu einer Bewegung bzw. geringfügigen Verschwenkung des kurvenäußeren Rades um die sog. Spur-Achse AS in Richtung Vorspur, wobei diese Spur-Achse AS im wesentlichen vertikal durch den seitenkraftneutralen Punkt verläuft. In der vorliegenden Figurendarstellung fällt die Spur-Achse AS mit der Achse A1 zusammen, jedoch handelt es sich hierbei um einen Sonderfall, da bekanntlich der Verlauf der Spur-Achse AS auch von der Ausgestaltung des Lenkerarm-Lagers 2a abhängig ist. Bekanntlich spielt hierbei auch die Sturzsteifigkeit eine Rolle, jedoch muss hierauf vorliegend nicht näher eingegangen werden. Erläutert werden soll vielmehr der weiter oben genannte zusätzliche "Parameter" in Form der Ausrichtung der Achse A2 durch entsprechende Gestaltung der Abstützung 8.

Ist nämlich gemäß der Abwandlung nach Fig.8a das Gummilager 9, über das der Stützarm 4 am zweiten Lenkerarm 3 in der Abstützung 8 abgestützt ist, so angeordnet, dass die die wesentlich härtere Abstützung definierende Achse A2 gegenüber der Vertikalen geneigt ist und dabei gegenüber dem Ausführungsbeispiel in der Darstellung nach Fig.7a um ein gewisses Maß im Uhrzeigersinn verdreht ist, so liegt bzw. "wandert" gemäß Fig.8b der seitenkraftneutrale Punkt N in Fahrtrichtung F betrachtet (weiter) nach vorne, weil sich die Achsen A1 und A2 hinsichtlich ihrer Neigung gleichartig verhalten. Bei der Variante nach den Figuren 8a, 8b liegt der seitenkraftneutrale Punkt N um die elastokinematische Nachlaufstrecke S2 vor dem Radaufstandspunkt R, wodurch das kurvenäußere Rad unter Seitenkraft-Einwirkung in Nachspur geht. Selbstverständlich ist auch eine neutrale Auslegung möglich, bei welcher der seitenkraftneutrale Punkt N mit dem Radaufstandspunkt R zusammenfällt. Tendenziell bewirkt also ein Verdrehen des Gummilagers 9 bzw. der Abstützung 8 ausgehend von der Position nach Fig.7a im Uhrzeigersinn U gemäß Fig.8a eine Verlagerung des seitenkraftneutralen Punkts N nach vorne, wodurch sich die Spur des Rad unter Seitenkraft mit zunehmendem Drehwinkel zunächst zunehmend weniger ändert, bis der seitenkraftneutrale Punkt N und der Radaufstandspunkt R zusammenfallen, wonach mit weiteren Verdrehen des Gummilagers 9 gemäß Pfeilrichtung U das kurvenäußere Rad unter Seitenkrafteinwirkung zunehmend in Richtung Nachspur geht. Gleichzeitig stellt sich mit einer solchen Verdrehung des Gummilagers 9 gemäß Pfeilrichtung U beim Bremsen sowie beim Einfedern eine verstärkte Lenktendenz des Rades in Richtung Vorspur ein. Ein umgekehrtes Verhalten ergibt sich bei Verdrehen des Gummilagers 9 gegen Pfeilrichtung U von Fig.8a. Da der seitenkraftneutrale Punkt zusätzlich durch die Lage des Punktes P1 am Radträger 1, in dem der zweite Lenkerarm 3 gelenkig befestigt ist, festgelegt wird, kann selbstverständlich auch durch geeignete Festlegung der Lage des Punktes P1 das Verhalten des Rades unter Seitenkrafteinwirkung festgelegt werden. Ferner sei darauf hingewiesen, dass die Achsen A1 und A2 nicht im geometrischen Sinne parallel sind bzw. sein müssen, vielmehr ist das tendenziell gleiche Verhalten bei Verdrehen das Achse A2 in bzw. gegen Pfeilrichtung U wesentlich.

Vorteilhafterweise kann anders als bei herkömmlichen Schräglenkerachsen bei einer erfindungsgemäßen Fahrzeug-Radaufhängung auf relativ einfache Weise die Spur und der Sturz des Rades eingestellt werden. Hierzu kann in der Abstützung 8 eine entsprechende Einstellmöglichkeit vorgesehen sein, derart, dass nach Öffnen dieser Einstellmöglichkeit der Stützarm 4 gegenüber dem zweiten Lenkerarm 3 geringfügig verlagert werden kann. Mit Schließen dieser Einstellmöglichkeit, die beispielsweise in bekannter Weise in Form eines in einer größeren Bohrung quer zur Bohrungsachse verschiebbaren Bolzens ausgebildet sein kann, sind dann Spur und Sturz festgelegt. Wenn im Rahmen einer solchen Einstellung der Radträger 1 um die sog. Einstellachse ST (vgl. Fig.5) die durch die Lenkerarm-Lager 2a und 3a beschrieben ist, gekippt wird, indem das dem Radträger 1 abgewandte Ende des Stützarmes 4 im wesentlichen in Vertikalrichtung bewegt wird, wird der Rad-Sturz eingestellt. Daraufhin erfolgt die Einstellung der Rad-Spur durch geeignete Verlagerung des besagten Endes des Stützarmes 4 im wesentlichen in Horizontalrichtung, wobei das Lenkerarm-Lager 2a freigegeben werden muss, was in grundsätzlich bekannter Weise durch Lösen des zugehörigen Lagerbocks (nicht gezeigt) erfolgen kann. Im übrigen sei noch darauf hingewiesen, dass durchaus eine Vielzahl von Details abweichend von obigen Erläuterungen gestaltet sein kann, ohne den Inhalt der Patentansprüche zu verlassen.

## Patentansprüche

1. Fahrzeug-Radaufhängung der Schräglenker-Bauart mit von einem Radträger (1) ausgehenden Lenkerarmen (2, 3,4), von denen ein erster (Lenkerarm 2) annähernd in Fahrzeug-Längsrichtung (Fahrtrichtung F) ausgerichtet ist und ein zweiter (Lenkerarm 3) annähernd in Richtung einer Winkelhalbierenden zwischen der Fahrzeug-Längsrichtung (F) und Fahrzeug-Querrichtung verläuft und deren letztlich am Fahrzeugaufbau über Lenkerarm-Lager (2a, 3a) abgestützte Enden eine im wesentliche horizontale Momentan-Achse (MA) für den Radträger (1) bezüglich Ein- und Ausfederbewegungen des Fahrzeugaufbaus bestimmen, wobei der Radträger (1) durch geeignete Gestaltung von zumindest einem der Lenkerarme (3, 4) sowie geeignet elastischer Ausbildung zumindest eines der Lenkerarm-Lager (2a) unter Einwirkung von Bremskräften oder im Falle einer Kurvenfahrt von Seitenkräften (F_{S}) auf das kurvenäußere am Radträger (1) befestigte Rad geringfügig um eine sog. Spur-Achse (AS) insbesondere in Richtung Vorspur verschwenkbar ist,
**dadurch gekennzeichnet, dass** mit dem Radträger (1) ein Stützarm (4) fest verbunden ist, der über eine gewisse Strecke neben dem zweiten Lenkerarm (3) im wesentlichen parallel zu diesem verläuft und an diesem zweiten Lenkerarm (3) im Bereich zwischen dessen radträgerseitigem Ende und fahrzeugaufbau-seitigem Ende über eine Abstützung (8) abgestützt ist, die in im wesentlichen horizontaler Richtung wesentlicher weicher ist als in im wesentlichen vertikaler Richtung, wobei eine geeignete Gestaltung des zweiten Lenkerarms (3) und/oder des Stützarmes (4) die geringfügige Verschwenkbewegung des Radträgers (1) um die Spur-Achse (AS) ermöglicht.

2. Fahrzeug-Radaufhängung nach Anspruch 1,
**dadurch gekennzeichnet, dass** die geeignete Gestaltung des zweiten Lenkerarms (3) und/oder des Stützarmes (4) darin besteht, dass zumindest einer dieser beiden Lenkerarme nach Art eines sog. Schwertlenkers in Vertikalrichtung sowie im wesentlichen in Fahrzeug-Querrichtung steif und in der Horizontalebene in Fahrzeug-Längsrichtung elastisch verformbar ausgebildet ist.

3. Fahrzeug-Radaufhängung nach Anspruch 1,
**dadurch gekennzeichnet, dass** der zweite Lenkerarm (3) ein eigenständiges und somit vom Radträger (1) trennbares Bauteil ist, das/der mit einem Ende zur Darstellung der genannten Spur-Achse (A1) gelenkig mit dem Radträger (1) verbunden ist.

4. Fahrzeug-Radaufhängung nach einem der vorangegangenen Ansprüche,
**dadurch gekennzeichnet, dass** die Abstützung (8) zwischen dem Stützarm (4) und dem zweiten Lenkerarm (3) in Form einer Pendelstütze oder eines geeignet elastisch gestalteten Gummilagers (9) ausgebildet ist.

5. Fahrzeug-Radaufhängung nach einem der vorangegangenen Ansprüche,
**dadurch gekennzeichnet, dass** die mögliche Verschwenkbewegung des Radträgers (1) um die Spur-Achse (AS) durch einen Anschlag begrenzt ist.

6. Fahrzeug-Radaufhängung nach Anspruch 5,
dadruch gekennzeichnet, dass die mögliche Verschwenkbewegung des Stützarms (4) gegenüber dem zweiten Lenkerarm (3) durch einen Anschlag (10) begrenzt ist.

7. Fahrzeug-Radaufhängung nach einem der vorangegangenen Ansprüche,
**dadurch gekennzeichnet, dass** eine Tragfeder (6), über die der Fahrzeugaufbau anteilig letztlich auf dem Rad abgestützt ist, auf einem sich zwischen dem ersten Lenkerarm (2) und dem Stützarm (4) erstreckenden Stegabschnitt (5), der wie der Stützarm (4) und der erste Lenkerarm (2) einstückig mit dem Radträger (1) verbunden ist, abgestützt ist.

## Claims

1. A vehicle wheel suspension of the semi-trailing construction with control arms (2, 3, 4) extending from a wheel carrier (1), of which a first control arm (control arm 2) is oriented approximately in the longitudinal direction of the vehicle (travel direction F) and a second control arm (control arm 3) runs approximately in the direction of an angle bisector between the longitudinal direction (F) of the vehicle and the transverse direction of the vehicle and the ends of which ultimately supported on the vehicle body by means of control arm bearings (2a, 3a) determine a substantially horizontal instantaneous axis (MA) for the wheel carrier (1) with respect to spring jounce and rebound movements of the vehicle body, wherein the wheel carrier (1), owing to a suitable configuration of at least one of the control arms (3, 4) and a suitable resilient configuration of at least one of the control arm bearings (2a) under the action of braking forces or, when cornering, of lateral forces (F_{S}) on the outside wheel fastened to the wheel carrier (1), can be pivoted slightly about a so-called toe axis (AS), more especially in the toe-in direction, **characterised in that** a support arm (4) is firmly connected to the wheel carrier (1) and, over a certain distance, runs next to the second control arm (3), substantially parallel thereto, and is supported on this second control arm (3) in the region between its wheel carrier-side end and vehicle body-side end by means of a support (8), which is substantially softer in the substantially horizontal direction than in the substantially vertical direction, a suitable configuration of the second control arm (3) and/or the support arm (4) making the slight pivoting movement of the wheel carrier (1) about the toe axis (AS) possible.

2. A vehicle wheel suspension according to claim 1, **characterised in that** the suitable configuration of the second control arm (3) and/or of the support arm (4) consists **in that** at least one of these two control arms is configured in the manner of a so-called control blade arm to be rigid in the vertical direction and substantially in the transverse direction of the vehicle and to be elastically deformable in the horizontal plane in the longitudinal direction of the vehicle.

3. A vehicle wheel suspension according to claim 1, **characterised in that** the second control arm (3) is an independent component, which can therefore be separated from the wheel carrier (1) and which is connected by one end in an articulated manner to the wheel carrier (1) to represent said toe axis (A1).

4. A vehicle wheel suspension according to any one of the preceding claims, **characterised in that** the support (8) is formed between the support arm (4) and the second control arm (3) in the form of a pendulum support or a suitably resiliently formed rubber bearing (9).

5. A vehicle wheel suspension according to any one of the preceding claims, **characterised in that** the possible pivoting movement of the wheel carrier (1) about the toe axis (AS) is limited by a stop.

6. A vehicle wheel suspension according to claim 5, **characterised in that** the possible pivoting movement of the support arm (4) is limited in relation to the second control arm (3) by a stop (10).

7. A vehicle wheel suspension according to any one of the preceding claims, **characterised in that** a bearing spring (6), by means of which the vehicle body is proportionally ultimately supported on the wheel, is supported on a web portion (5), which extends between the first control arm (2) and the support arm (4) and, like the support arm (4) and the first control arm (2), is connected in one piece to the wheel carrier (1).

## Revendications

1. Suspension de roue de véhicule du type à bras de suspension inclinés comportant des bras de suspension (2, 3, 4) s'étendant à partir d'un support de roue (1) dont un premier bras (bras de suspension 2) est dirigé approximativement dans la direction longitudinale du véhicule (direction de déplacement F) tandis qu'un second bras (bras de suspension 3) s'étend essentiellement dans la direction de la bissectrice entre la direction longitudinale du véhicule (F) et la direction transversale du véhicule et dont les extrémités s'appuyant en fin de compte contre la carrosserie du véhicule par l'intermédiaire de paliers de bras de suspension (2a, 3a) définissent un axe instantané (MA) essentiellement horizontal pour le support de roue (1) par rapport aux mouvements de rétraction et de déploiement élastique de la carrosserie du véhicule, le support de roue (1) pouvant pivoter faiblement du fait de la configuration adaptée d'au moins l'un des bras de suspension (3, 4) ainsi que de la réalisation élastique adaptée d'au moins l'un des paliers des bras de suspension (2a), sous l'action de forces de freinage ou dans le cas d'un déplacement en virage de forces latérales (FS) s'exerçant sur la roue fixée sur le support de roue (1) à l'extérieur du virage, autour d'un axe dit de trace (AS), en particulier dans le sens d'un pincement,
**caractérisée en ce que**
sur le support de roue (1) est fixé rigidement un bras d'appui (4) qui s'étend sur une distance donnée à proximité du second bras de suspension (3) essentiellement parallèlement à ce bras, et s'appuie sur ce second bras de suspension (3), dans la zone située entre son extrémité côté support de roue et son extrémité côté carrosserie du véhicule sur un élément d'appui (8) qui est essentiellement plus mou dans la direction essentiellement horizontale que dans la direction essentiellement verticale, une configuration adaptée du second bras de suspension (3) et/ou du bras d'appui (4) permettant le faible mouvement de pivotement du support de roue (1) autour de l'axe de piste (AS).

2. Suspension de roue de véhicule conforme à la revendication 1,
**caractérisée en ce que**
la configuration adaptée du second bras oscillant (3) et/ou du bras d'appui (4) réside dans le fait qu'au moins l'un de ces deux bras de suspension est réalisé à la manière d'un bras de suspension dit en losange rigide dans la direction longitudinale ainsi qu'essentiellement dans la direction transversale du véhicule et élastiquement déformable dans le plan horizontal dans la direction longitudinale du véhicule.

3. Suspension de roue de véhicule conforme à la revendication 1,
**caractérisée en ce que**
le second bras de suspension (3) est un élément autonome et donc séparable du support de roue (1) qui est relié en étant articulé sur le support de roue (1) par une extrémité pour définir l'axe de trace (AS).

4. Suspension de roue de véhicule conforme à l'une des revendications précédentes,
**caractérisée en ce que**
l'élément d'appui (8) entre le bras d'appui (4) et le second bras de suspension (3) est réalisé sous la forme d'un support oscillant ou d'un palier à suspension caoutchouc (9) ayant une configuration élastique adaptée.

5. Suspension de roue de véhicule conforme à l'une des revendications précédentes,
**caractérisée en ce que**
la possibilité de pivotement du support de roue (1) autour de l'axe de piste (AS) est limitée par un butée.

6. Suspension de roue de véhicule conforme à la revendication 5,
**caractérisée en ce que**
la possibilité de pivotement du bras d'appui (4) par rapport au second bras de suspension (3) est limitée par une butée (10).

7. Suspension de roue de véhicule conforme à l'une des revendications précédentes,
**caractérisée en ce qu'**
un ressort de suspension (6) par l'intermédiaire duquel s'appuie en fin de compte proportionnellement la carrosserie du véhicule sur la roue, s'appuie sur un segment de traverse (5) s'étendant entre le premier bras de suspension (2) et le bras d'appui (4) qui est, comme le bras d'appui (4) et le premier bras de suspension (2) relié en une seule pièce avec le support de roue (1).
